# EUROPEAN PATENT SPECIFICATION

(11) **EP 2 509 384 B1**
(45) Date of publication and mention of the grant of the patent: **19.02.2014**
(21) Application number: 10834228.8
(22) Date of filing: 01.12.2010
(51) Int. Cl.: H04W 74/08, H04W 4/00

(54) **METHOD AND APPARATUS FOR RANDOMIZING NETWORK ACCESS TIME**
VERFAHREN UND VORRICHTUNG ZUR RANDOMISIERUNG DER NETZWERKZUGANGSZEIT
PROCÉDÉ ET APPAREIL POUR LA RANDOMISATION DU TEMPS D'ACCÈS AU RÉSEAU

(30) Priority: 02.12.2009 CN 200910252899
(43) Date of publication of application: 10.10.2012
(60) Divisional application: 13186097.5
(73) Proprietor: Huawei Technologies Co., Ltd., Guangdong 518129 (CN)
(72) Inventor: DENG, Yongfeng, Shenzhen Guangdong 518129 (CN); SHU, Bing, Shenzhen Guangdong 518129 (CN); QIN, Jun, Shenzhen Guangdong 518129 (CN); ZHAO, Yang, Shenzhen Guangdong 518129 (CN)
(74) Representative: Thun, Clemens
(86) International application number: PCT/CN2010/079356
(87) International publication number: WO 2011/066795

(56) References cited:
- EP-A1- 2 096 884
- WO-A2-01/37494
- CN-A- 101 282 575
- CN-A- 101 400 145
- CN-A- 101 483 923
- CN-C- 1 253 051
- US-A- 5 729 542
- SIEMENS NETWORKS: "RACH back-off control", 3GPP DRAFT; R2-071316, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. St. Julian; 20070322, 22 March 2007 (2007-03-22), XP050134266, [retrieved on 2007-03-22]
- TSG-SA WG4: "3GPP TS 26.346 version 2.0.0 Multimedia Broadcast/Multicast Service; Protocols and Codecs (Release 6)", 3GPP DRAFT; SP-050082, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG SA, no. Tokyo, Japan; 20050307, 7 March 2005 (2005-03-07), XP050204306, [retrieved on 2005-03-07]

## Description

### FIELD OF THE INVENTION

The present invention relates to the field of communications technologies, and in particular, to a network access method and apparatus for M2M terminals.

### BACKGROUND OF THE INVENTION

M2M (Machine to Machine, "machine" to "machine") communications is connecting various end equipment or sub-systems that are omnipresent through a plurality of communications technologies, and converging the equipment or sub-systems into a management system so as to manage and serve the end equipment or the sub-systems. For example, a module capable of monitoring running parameters of a power distribution network is installed in electric equipment so as to implement real-time monitoring, control, and management & maintenance of a power distribution system; a module capable of collecting information of oil well working conditions is installed in petroleum equipment to adjust and control oil well equipment remotely so as to learn about working conditions of the oil well equipment precisely in time; and a terminal for collecting vehicle load information and a remote monitoring system are mounted in automobiles to monitor vehicle running states.

Applications of M2M services require that M2M terminals are deployed within a certain region at a large number. Moreover, most M2M services feature a small data volume, scattered and frequent data transmission, and diversified service types. Therefore, the launch of the M2M services may interrupt the current mature commercial communication networks and cause capacity impact on the networks. For example, the number of the M2M terminals is large, and if the M2M terminals access a network at the same time, a burst spike of access bursts (Access Burst, AB) is bound to occur, as a result, an access channel is congested.

Regarding the problem of how to avoid the impact on the existing communication networks based on the radio resource management after the M2M services are introduced and satisfy requirements of the M2M services at the same time, currently, an M2M application platform configures different data transmission parameters for different M2M terminals through signaling, so as to control different M2M terminals to make them to access the network and transmit data at different time periods.

However, in the implementation of the M2M communications, the prior art at least has the following problem:
To prevent collision of the M2M terminals when they attempt to obtain access resources, dedicated access time needs to be assigned for each M2M terminal, which definitely increases signaling loads of the network.

D1 (US 5729542A) discloses a method for accessing a communication system relies on the use of varying access probabilities for subscribers or messages of varying priority. A serving infrastructure entity determines access probabilities in response to known system parameters like the current rate of access attempts for each priority class of user/message. Values representative of these access probabilities are then transmitted to the subscriber unit(s), for example by use of a system broadcast channel or control channels. These values are then used by the subscriber units in determining when to access an uplink channel. A temporal and/or proportional priority distribution approach is preferably used in determining the access values. As a result of this contention-based prioritization, an expedited access is achieved by higher priority units/traffic, thus increasing their throughput.

D2 (WO 01/37494A2) discloses a method for reducing access congestion in a communication system, the communication system including an application host communicatively coupled to at least one terminal via a packet data system, the packet data system employing a random access channel, comprising the steps of: transmitting a message from the application host to the terminal via the packet data system, the message including an access description element which specifies a time interval; receiving the message at the terminal; generating a reply to the message at the terminal; and transmitting the reply to the application host via the random access channel of the packet data system following a lapse of the time interval specified in the message.

D3 (SIEMENS NETWORKS: "RACH back-off control", 3GPP DRAFT; R2-071316; RAN WG2, St. Julian; 20070322, 22 March 2007 (2007-03-22), XP050134266) discloses a RACH access control mechanism in the LTE system. To control a UEs application of a random delay before attempting RACH access at least the following methods can be used: a) The UE calculates a random time delay T, for example uniformly distributed between T1 and T2, where T1 and T2 are signalled backoff parameters. The UE attempts RACH access at the first opportunity after T. b) The UE applies a probability factor test at each RACH opportunity to identify whether it is permitted to attempt access at this time. The probability threshold p is signalled as the backoff control parameter.

### SUMMARY OF THE INVENTION

Embodiments of the present invention provide a network access method and apparatus.

To achieve the above objectives, the embodiments of the present invention adopt technical solutions in the following.

A network access method includes:
obtaining data transmission configuration information, wherein the data transmission configuration information includes start time, an effective duration of data transmission, and randomization granularity;
determining service triggering time according to a predetermined triggering time randomization policy; and
at the determined service triggering time, initiating, by a terminal, a random access request procedure;
wherein the determining the service triggering time according to the predetermined triggering time randomization policy includes:
   calculating a time span of the data transmission according to the start time and the effective duration of the data transmission;
   dividing the time span into at least one time interval according to the randomization granularity; and
   randomly selecting a time interval from the at least one time interval, wherein start time of the selected time interval is the service triggering time.

A network access apparatus includes:
an obtaining unit, configured to obtain data transmission configuration information, wherein the data transmission configuration information includes start time, an effective duration of data transmission, and randomization granularity;
a determining unit, configured to determine service triggering time according to a predetermined triggering time randomization policy; and
an access unit, configured to initiate a random access request procedure at the determined service triggering time;
wherein the determining unit includes:
   a calculating module, configured to calculate a time span of the data transmission according to the start time and the effective duration of the data transmission;
   a dividing module, configured to divide the time span into at least one time interval according to the randomization granularity; and
   a selecting module, configured to randomly select a time interval from the at least one time interval, wherein start time of the selected time interval is the service triggering time.

In the network access method and apparatus provided by the embodiments of the present invention, the terminal side determines random time as the service triggering time according to the predetermined policy. In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network.

### BRIEF DESCRIPTION OF THE DRAWING

To describe the technical solutions according to the embodiments of the present invention or in the prior art more clearly, the accompanying drawings for describing the embodiments are introduced briefly in the following. Apparently, the accompanying drawings in the following description are only some embodiments of the present invention, and persons skilled in the art can derive other drawings from the accompanying drawings without creative efforts.
FIG. 1 is a flow chart of a network access method according to Embodiment 1 of the present invention;
FIG. 2 is a schematic structural diagram of a network access apparatus according to Embodiment 1 of the present invention;
FIG. 3 is a signaling flow chart of a network access method according to Embodiment 2 of the present invention;
FIG. 4 is a signaling flow chart of a network access method according to Embodiment 3 of the present invention;
FIG. 5 is a signaling flow chart of a network access method according to Embodiment 4 of the present invention;
FIG. 6 is a schematic structural diagram of a network access apparatus according to Embodiment 5 of the present invention;
FIG. 7 is a schematic structural diagram of a network access system according to Embodiment 6 of the present invention;
FIG. 8 is a flow chart of a network access method according to an example; and
FIG. 9 is a schematic structural diagram of a network access apparatus according to an example.

### DETAILED DESCRIPTION OF THE EMBODIMENT

The technical solutions of the present invention are clearly described in the following with reference to the accompanying drawings. It is obvious that the embodiments to be described are only a part rather than all of the embodiments of the present invention.

Embodiments of the present invention provide a network access method and apparatus, which are used to solve the problem of access congestion without adding signaling loads of the network. The network access method and apparatus provided by the embodiments of the present invention are described in detail below with reference to the accompanying drawings.

### Embodiment 1

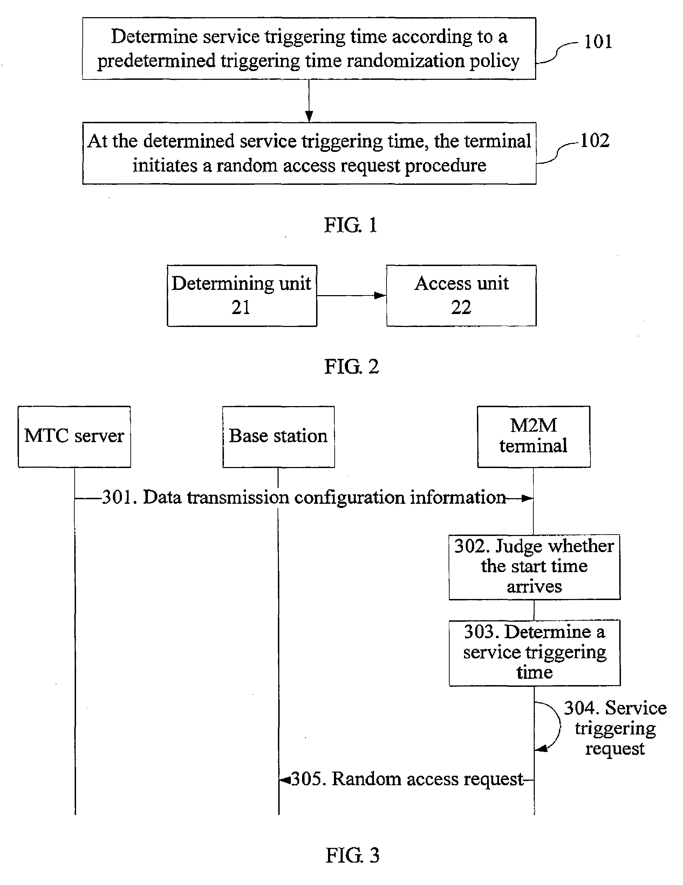

As shown in FIG. 1, this embodiment provides a network access method, which includes the following steps:
101: Determine service triggering time according to a predetermined triggering time randomization policy.

In the predetermined triggering time randomization policy, a certain time within a time span of data transmission may be randomly selected as the service triggering time; or, a triggering condition (for example, a threshold) may be set, and the time when the triggering condition is met is the service triggering time.

The service triggering time may be network access time when an M2M terminal reports information for a specific service. Taking a smart metering service for example, the service triggering time may be the time of initiating a network random access request when the M2M terminal needs to report power consumption data.

102: At the determined service triggering time, the terminal initiates a random access request procedure.

Specifically, the M2M terminal may select an access burst (AB) according to an existing network random access process to initiate a random access request to trigger a specific service establishing process.

In this embodiment, the executor of the above steps may be the M2M terminal.

To better implement the foregoing method, this embodiment also provides a network access apparatus, which includes a determining unit 21 and an access unit 22, where
the determining unit 21 is configured to determine service triggering time according to a predetermined triggering time randomization policy; and
the access unit 22 is configured to initiate a random access request procedure at the determined service triggering time.

In this embodiment, the network access apparatus may be the M2M terminal.

In the network access method and apparatus provided in the embodiments of the present invention, the terminal side determines random time as the service triggering time according to the predetermined policy. In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network.

### Embodiment 2

As shown in FIG. 3, this embodiment provides a network access method, which includes the following steps:
301: An MTC server (Machine Type Communication Server, machine type communication server) transmits data transmission configuration information to an in-group M2M terminal.

The in-group M2M terminal refers to an M2M terminal in the same terminal group.

In this embodiment, the data transmission configuration information includes start time and an effective duration of an M2M terminal for performing the data transmission. The start time and the effective duration define a time span for the M2M terminal to perform the data transmission. If the data transmission configuration information does not include the start time, the terminal regards the time when the terminal receives the data transmission configuration information as the start time of the data transmission by default.

In addition, the data transmission configuration information may further include service randomization configuration information, and the service randomization configuration information includes randomization granularity, or the randomization granularity and a service triggering threshold. The randomization granularity may be a fixed time period, for example, 120/26ms, 5ms, and 10ms. The service triggering threshold may be configured to any value within an open interval of (0,1). Definitely, the randomization granularity and the service triggering threshold may also be directly fixed in the M2M terminal to simplify a configuration process of data transmission information.

Taking a smart metering service for example, the MTC server may configure the following: a smart metering terminal reports power consumption information between 9 o'clock and 10 o'clock. In addition, the MTC server may also indicate that the randomization granularity of current data transmission is 36ms, or the service triggering threshold is 10-4.

The M2M terminal may locally store corresponding data transmission configuration and use it in a next data transmission process.

302: The M2M terminal judges whether the start time of the data transmission in the data transmission configuration information arrives. If the time arrives, perform step 303; and if the time does not arrive, repeat step 302.

303: In an application layer of the M2M terminal, determine service triggering time according to a predetermined triggering time randomization policy and the data transmission configuration information transmitted by the MTC server.

Specifically, this embodiment provides two methods for determining the service triggering time as follows:
1) Regarding a condition that the service randomization configuration information includes the randomization granularity only, the service triggering time may be determined through the following process:
   The M2M terminal calculates a time span of data transmission according to the start time and the effective duration of the data transmission, then divides the time span into several time intervals according to the randomization granularity, and randomly selects start time of a time interval from the several time intervals to serve as the service triggering time.
   Taking the foregoing smart metering service for example, the MTC server configures the following: the start time of the data transmission is 9 o'clock, the effective duration is 1 hour, and the randomization granularity is 36ms, so that the time period from 9 o'clock to 10 o'clock may be divided into 100000 (1 h/36ms) time intervals. The M2M terminal selects one from the 100000 time intervals at equal probability to serve as service triggering time interval. The start time of the service triggering time interval is the service triggering time. From the probability theory, it may be deduced that the probability of initiating a smart metering service within any time interval by each M2M terminal is 10-5.
2) Regarding a condition that the service randomization configuration information includes the randomization granularity and a service triggering threshold, the service triggering time may be determined through the following process:
   The M2M terminal calculates a time span of data transmission according to the start time and the effective duration of the data transmission, then divides the time span into several time intervals according to the randomization granularity, and generates a random number in a range (0,1) at each interval of the at least one time interval in sequence at equal probability till a random number smaller than the service triggering threshold occurs, where the start time of a current time interval corresponding to the random number smaller than the service triggering threshold is the service triggering time.

Still taking the foregoing smart metering service for example, the MTC server configures the following: the start time of the data transmission is 9 o'clock, the effective duration is 1 hour, the randomization granularity is 36ms, and the service triggering threshold is 10-4, so that the time period from 9 o'clock to 10 o'clock may be divided into 100000 (1 h/36ms) time intervals. The M2M terminal generates a random number in the range (0,1) within any time interval at equal probability. Comparing the random number with the service triggering threshold 10-4, if the random number is smaller than the service triggering threshold 10-4, the M2M terminal uses the start time of a current time interval as the service triggering time to trigger the smart metering service; if the random number is not smaller than the service triggering threshold 10-4, the M2M terminal waits for a next service triggering time interval to generate a new random number, and compares the new random number with the service triggering threshold. In the implementation method, the probability of initiating a smart metering service within any time interval by each M2M terminal is 10-4.

304: The application layer of the M2M terminal sends a service triggering request to an RR (Radio Resources, radio resources) layer at the determined service triggering time.

305: After receiving the service triggering request, the RR layer of the M2M terminal selects, according to the existing random access process, an access burst to send a random access request to a base station to trigger a service establishing process.

After the data transmission is completed, the M2M terminal exits the current data transmission process.

In the data transmission process, if the M2M terminal receives an access prohibition indication delivered by the base station due to reasons such as network overload, the RR layer of the M2M terminal forwards the access prohibition indication to the application layer after receiving the access prohibition indication. After receiving the access prohibition indication, the application layer stops sending a service request. After receiving an access permission indication delivered by the base station, the RR layer reports the access permission indication to the application layer. Then, the application layer re-calculates a new effective transmission duration (that is, a remaining part in the time span of the data transmission configured by the MTC server), and re-selects service triggering time to continue the foregoing data transmission process.

In the network access method of this embodiment, the application layer of the terminal side determines random time as the service triggering time according to a predetermined policy In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network.

### Embodiment 3

In Embodiment 2, because the application layer of the M2M terminal is incapable of learning about the configuration condition of an access channel on a radio interface, the use efficiency of a service random triggering mechanism cannot be maximized. For example, if a current cell is configured with two random access channels at the same time, the access opportunity may be provide two M2M terminals at the same time. However, the application layer of the M2M terminal may select the service triggering time in the dimension of time only, so that 1/2 of the access channel resources are idle. Therefore, this embodiment provides a network access method based on RR layer control to implement a service triggering randomization mechanism.

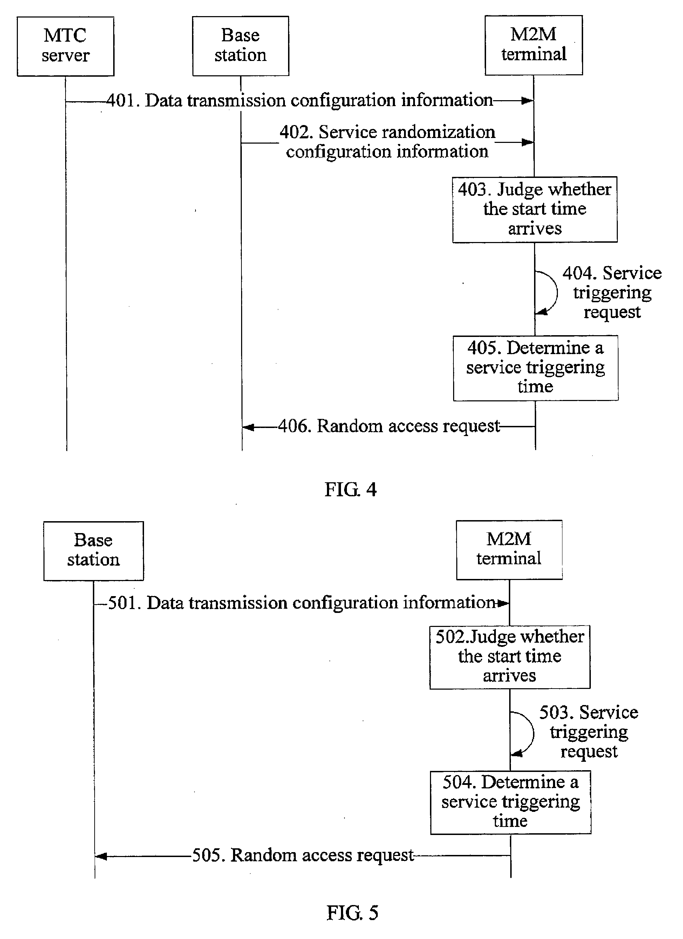

As shown in FIG. 4, this embodiment provides a network access method, which includes the following steps:
401: An MTC server transmits data transmission configuration information to an in-group M2M terminal.

In this embodiment, the data transmission configuration information includes start time and an effective duration of an M2M terminal for performing the data transmission. The start time and the effective duration define a time span for the M2M terminal to perform the data transmission. If the data transmission configuration information does not include the start time, the terminal regards the time when the terminal receives the data transmission configuration information as the start time of the data transmission by default.

402: A base station broadcasts M2M service randomization configuration information to the M2M terminal.

The service randomization configuration information includes randomization granularity, or the randomization granularity and a service triggering threshold. The randomization granularity may be a fixed time period, for example, 1 TS (Time Slot, time slot) or 2 TS. The service triggering threshold may be configured to any value within an open interval of (0,1).

Taking a smart metering service for example, the MTC server may configure the following: a smart metering terminal reports power consumption information between 9 o'clock and 10 o'clock. In addition, the base station may further indicate that the randomization granularity of the current data transmission is 1 TS (120/26ms) or the service triggering threshold is 1/78000.

The M2M terminal may locally store corresponding configuration information and use it in a next data transmission process.

Definitely, the randomization granularity and the service triggering threshold may also be directly fixed in the M2M terminal to save air-interface transmission resources. In this circumstance, there is no need to perform step 402; and step 403 is performed directly after step 401.

403: The M2M terminal judges whether the start time of the data transmission in the data transmission configuration information arrives. If the time arrives, perform step 404; and if the time does not arrive, repeat step 403.

404: An application layer of the M2M terminal sends a service triggering request to an RR layer, where the request carries the effective duration (1 hour) of the data transmission.

405: After receiving the effective duration of the data transmission delivered by the application layer, the RR layer of the M2M terminal determines service triggering time according to a predetermined triggering time randomization policy and the received M2M service randomization configuration information delivered by the base station.

Specifically, this embodiment provides two methods for determining the service triggering time as follows:
1) Regarding a condition that the service randomization configuration information includes the randomization granularity only, the service triggering time may be determined through the following process:
   The M2M terminal calculates a time span of data transmission according to the start time and the effective duration of the data transmission, then divides the time span into several time intervals according to the randomization granularity, and randomly selects a time interval from the several time intervals to serve as a service triggering time interval, where a start time slot of the service triggering time interval is the service triggering time.
   Taking the foregoing smart metering service for example, the MTC server configures the following: the start time of the data transmission is 9 o'clock, the effective duration is 1 hour, and the randomization granularity indicated by the base station is 1 TS (120/26ms), so that the time period from 9 o'clock to 10 o'clock may be divided into 780000 time intervals. The M2M terminal selects one from the 780000 time intervals at equal probability to serve as a service triggering time interval. The start time slot of the service triggering time interval is the service triggering time. From the probability theory, it may be deduced that the probability of initiating a smart metering service within any time slot by each M2M terminal is 1/780000.
2) Regarding a condition that the service randomization configuration information includes the randomization granularity and a service triggering threshold, the service triggering time may be determined through the following process:
   The M2M terminal calculates a time span of the data transmission according to the start time and the effective duration of the data transmission, then divides the time span into several time intervals according to the randomization granularity, and generates a random number in the range (0,1) at each interval of the at least one time interval in sequence at equal probability till a random number smaller than the service triggering threshold occurs, where the start time slot of a current time interval corresponding to the random number smaller than the service triggering threshold is the service triggering time.

Still taking the foregoing smart metering service for example, the MTC server configures the following: the start time of the data transmission is 9 o'clock, the effective duration is 1 hour, the randomization granularity indicated by the base station is ITS (120/26ms), and the service triggering threshold is 1/78000, so that the time period from 9 o'clock to 10 o'clock may be divided into 780000 (1 h/1 TS) time intervals, and the M2M terminal generates a random number in the range (0,1) within any time interval at equal probability. Comparing the random number with the service triggering threshold 1/78000, if the random number is smaller than the service triggering threshold 1/78000, the M2M terminal uses the start time slot of the current time interval as the service triggering time to trigger the smart metering service; if the random number is not smaller than the service triggering threshold 1/78000, the M2M terminal waits for a next time interval to generate a new random number, and compares the random number with the service triggering threshold. In the implementation method, the probability of initiating a smart metering service within any time slot by each M2M terminal is 1/78000.

In this embodiment, the service triggering time determined by the RR layer of the M2M terminal corresponds to a "triggering time of an immediate assignment procedure" (TS44.018 3.3.1.1.2 Initiation of the immediate assignment procedure) in a standard.

406: After the determined service triggering time arrives, the RR layer of the M2M terminal selects, according to the existing random access process, an access burst to send a random access request to the base station to trigger a service establishing process.

In the solution of using the first method to determine the service triggering time, the RR layer of the M2M terminal may enter a dormant state before the service triggering time arrives, so that power resources may be saved.

After the data transmission is completed, the M2M terminal exits the current data transmission process.

In the data transmission process, if the M2M terminal receives an access prohibition indication delivered by the base station due to reasons such as network overload, the RR layer of the M2M terminal needs to monitor access indication information of the base station and adjust the effective transmission duration (that is, a remaining part in the time span of the data transmission configured by the MTC server) in real time. After receiving an access permission indication delivered by the base station, the RR layer of the M2M terminal re-selects service triggering time to continue the foregoing data transmission process.

In the network access method of this embodiment, the radio resources layer (RR layer) of the terminal side determines random time as the service triggering time according to a predetermined policy, in this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network. In addition, the RR layer can obtain the configuration condition of the access channel on the radio interface directly, and therefore a service triggering mechanism can be adjusted in real time and the use efficiency of the service random triggering mechanism can be increased.

### Embodiment 4

In this embodiment, a service randomization triggering solution of performing data transmission configuration in a communication system is provided.

As shown in FIG. 5, this embodiment provides a network access method, which includes the following steps:
501: A base station broadcasts data transmission configuration information to an in-group M2M terminal.

In this embodiment, the data transmission configuration information includes a start frame number and an effective frame quantity of an M2M terminal for performing the data transmission. If the data transmission configuration information does not include the start frame number, the terminal regards a radio frame of the received data transmission configuration information as the start frame of the data transmission by default.

In addition, the data transmission configuration information may further include service randomization configuration information, and the service randomization configuration information includes a service triggering threshold. The service triggering threshold may be configured to any value within an open range (0,1).

Taking a smart metering service for example, the MTC server may configure the following: a smart metering terminal reports power consumption information between 0 and 9999 frames. In addition, the base station may also indicate that the service triggering threshold of the current data transmission is 1/1000.

The M2M terminal may locally store corresponding configuration information and use it in a next data transmission process.

Definitely, the service triggering threshold may also be fixed in the M2M terminal directly to save air-interface transmission resources.

502: The M2M terminal judges whether the start frame used for data transmission in the data transmission configuration information arrives. If the time arrives, perform step 503; and if the time does not arrive, repeat step 502.

503: An application layer of the M2M terminal sends a service triggering request to an RR layer, where the request carries the effective frame quantity of the data transmission.

504: After receiving the effective frame quantity delivered by the application layer, the RR layer of the M2M terminal determines service triggering time according to a predetermined triggering time randomization policy.

Specifically, this embodiment provides two methods for determining the service triggering time as follows:
1) Regarding a condition that the data transmission configuration information merely includes the start frame number and the effective frame quantity, the service triggering time may be determined through the following process:
   The M2M terminal determines several effective frames that may be used in the data transmission according to the start frame number and the effective frame quantity of the data transmission, and then randomly selects one from the several effective frames, where an access time slot corresponding to the selected frame is the service triggering time.
   Taking the foregoing smart metering service for example, the network (base station) configures the following: the effective frames of data transmission are 0 to 9999 frames, and the M2M terminal selects one from the effective frames at equal probability and uses the access time slot corresponding to the selected frame as the service triggering time. From the probability theory, it may be deduced that the probability of initiating a smart metering service within any time slot by each M2M terminal is 1/10000.
2) Regarding that the data transmission configuration information further includes service randomization configuration information, namely, a condition that the data transmission configuration information further includes the service triggering threshold, the service triggering time may be determined through the following process:
   The M2M terminal determines several effective frames that may be used in the data transmission according to the start frame number and the effective frame quantity of the data transmission, and then generates random numbers in a range of (0,1) sequentially within an access time slot corresponding to the several effective frames at equal probability till a random number smaller than the service triggering threshold occurs, where the access time slot of a current frame corresponding to the random number smaller than the service triggering threshold is the service triggering time.

Still taking the foregoing smart metering service for example, the base station configures the following: the effective frames of data transmission are 0 to 9999 frames, and the service triggering threshold is 1/1000, so that the M2M terminal generates a random number in the range (0,1) within an access time slot corresponding to any effective frame at equal probability. Comparing the random number with the service triggering threshold 1/1000, if the random number is smaller than the service triggering threshold 1/1000, the M2M terminal uses an access time slot corresponding to a current frame as the service triggering time to trigger the smart metering service; if the random number is not smaller than the service triggering threshold 1/1000, the M2M terminal waits for a next frame to generate a new random number, and compares the random number with the service triggering threshold. In the implementation method, the probability of initiating a smart metering service within any time slot by each M2M terminal is 1/1000.

In this embodiment, the service triggering time determined by the RR layer of the M2M terminal corresponds to a "triggering time of an immediate assignment procedure" (TS44.018 3.3.1.1.2 Initiation of the immediate assignment procedure) in a standard.

505: After the determined service triggering time arrives, the RR layer of the M2M terminal selects, according to the existing random access process, an access burst to send a random access request to the base station to trigger a service establishing process.

In the solution of using the first method to determine the service triggering time, the RR layer of the M2M terminal may enter a dormant state before the service triggering time arrives, so that power resources may be saved.

After the data transmission is completed, the M2M terminal exits the current data transmission process.

In the network access method of this embodiment, an existing communication system is directly used to implement the M2M services, and the M2M terminal determines a time slot corresponding to an access frame as the service triggering time according to the predetermined policy. In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network. In addition, the RR layer can obtain the configuration condition of the access channel on the radio interface directly, and therefore a service triggering mechanism can be adjusted in real time and the use efficiency of the service random triggering mechanism can be increased.

### Embodiment 5

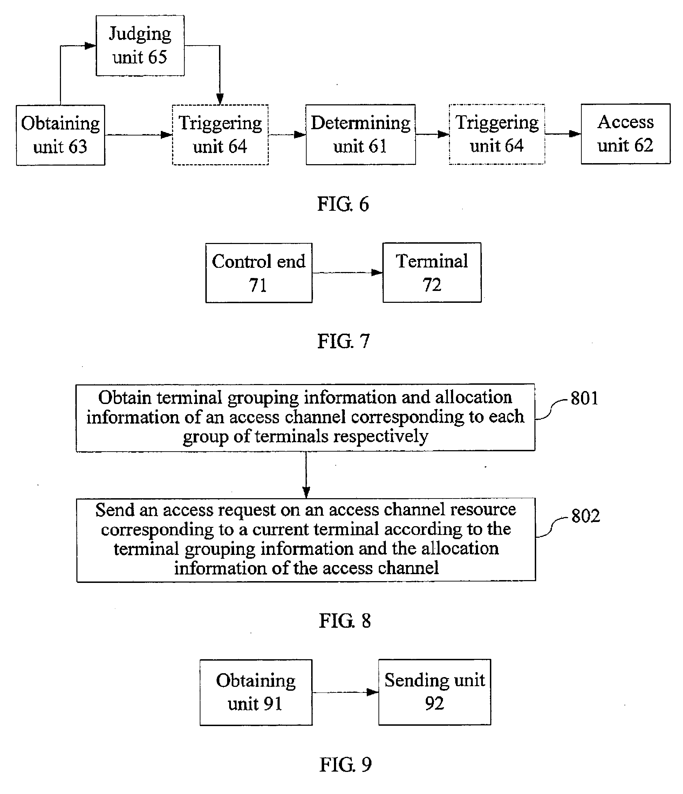

Corresponding to the aforementioned network access methods, this embodiment further provides a network access apparatus, as shown in FIG. 6, which includes a determining unit 61, an access unit 62, and an obtaining unit 63.

The obtaining unit 63 is configured to obtain data transmission configuration information, where the data configuration information includes start time and an effective duration of data transmission. Specifically, the start time and the effective duration of the data transmission are configured and delivered by an MTC server or a base station. If the data transmission configuration information delivered by the MTC server or the base station does not carry the start time of the data transmission, the obtaining unit 63 regards the time when it receives the data transmission configuration information as the start time of the data transmission by default.

The data transmission configuration information may further include randomization granularity, or the randomization granularity and a service triggering threshold. The randomization granularity and the service triggering threshold may be configured and delivered by the MTC server or the base station, or preset in the network access apparatus.

The determining unit 61 determines service triggering time according to a predetermined triggering time randomization policy and the start time, the effective duration, and service randomization configuration information of the data transmission.

When the determined service triggering time arrives, the access unit 62 sends a random access request to the base station to trigger the service establishing process.

The network access apparatus provided in this embodiment further includes a triggering unit 64 located at the application layer.

If the determining unit 61 is located at the radio resource layer (RR layer) of the apparatus, the triggering unit 64 is configured to send a service triggering request to the radio resource layer to trigger the determining unit 61 located at the RR layer to execute an operation of determining the service triggering time.

If the determining unit 61 is located at the application layer of the apparatus, the triggering unit 64 is configured to send the service triggering request to the radio resource layer at the service triggering time determined by the determining unit 61.

In the network access apparatus provided in this embodiment, the determining unit 61 may be implemented in the following manners.

In one manner, the determining unit 61 may include:
a calculating module, configured to calculate a time span of the data transmission according to the start time and the effective duration of the data transmission;
a dividing module, configured to divide the time span into at least one time interval according to the randomization granularity; and
a selecting module, configured to randomly select a time interval from the at least one time interval, where the start time of the selected time interval is the service triggering time.

In another manner, the determining unit 61 may include:
a calculating module, configured to calculate a time span of the data transmission according to the start time and the effective duration of the data transmission;
a dividing module, configured to divide the time span into at least one time interval according to the randomization granularity; and
a generating module, configured to generate a random number in the range (0,1) at each interval of the at least one time interval in sequence at equal probability till a random number smaller than the service triggering threshold occurs, where the start time of a current time interval is the service triggering time.

In addition, the network access apparatus provided in this embodiment may further include a judging unit 65, configured to judge whether the start time of the data transmission arrives.

The determining unit 61 needs to determine the service triggering time according to the predetermined triggering time randomization policy after the judging unit 65 determines that the start time of the data transmission arrives.

In the network access apparatus provided in the embodiment of the present invention, the terminal side determines random time as the service triggering time according to the predetermined policy. In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network.

### Embodiment 6

An embodiment of the present invention also provides a network access system, as shown in FIG. 7, which includes a control end 71 and a terminal 72.

The control end 71 is configured to transmit data transmission configuration information to the terminal 72.

The terminal 72 is configured to determine service triggering time according to a predetermined triggering time randomization policy and the data transmission configuration information, and initiate a random access request procedure to a base station when the service triggering time arrives.

The data transmission configuration information includes start time and an effective duration of the data transmission.

Preferably, the data transmission configuration information may further include randomization granularity; or, the data transmission configuration information may further include randomization granularity and a service triggering threshold.

The randomization granularity and service triggering threshold information may also be fixed in the terminal 72 directly. In such case, the data transmission configuration information may include only the start time and the effective duration of the data transmission.

In this embodiment, the control end 71 is a logical concept, which may be an MTC server or a part of the base station.

In the network access system provided in the embodiment of the present invention, the terminal side determines random time as the service triggering time according to the predetermined policy. In this way, the service triggering time is randomized. Therefore, a burst spike of access bursts caused by initiating M2M services at the same time is prevented, effectively solving the problem of a congestion phenomenon of a random access channel. Moreover, because the terminal determines the service triggering time randomly, there is no need to assign dedicated access time through delivering signaling by an M2M server, thereby reducing signaling loads of the network.

### Example

All M2M terminals sharing the same channel send access requests on the channel. When a large number of M2M terminals send access requests at the same time, an access conflict may occur. Therefore, in this example, the access channels are scheduled in groups.

This example provides a network access method, as shown in FIG. 8, which includes the following steps:
801: Obtain terminal grouping information and allocation information of an access channel corresponding to each group of terminals respectively.
802: Send an access request on an access channel resource corresponding to a current terminal according to the terminal grouping information and the allocation information of the access channel.

The executor of each step may be an M2M terminal. In addition, the allocation information of the access channel may be frame allocation information in the access channel.

Specifically, the network side groups the M2M terminals, determines to allocate different frames of the access channel to different groups of M2M terminals, and then broadcasts the M2M terminal grouping information and frame allocation information of the access channel respectively corresponding to each group of terminals to the M2M terminals. After obtaining the corresponding grouping information and frame allocation information, an M2M terminal sends an access request in a frame specified by a frame number corresponding to the group to which the M2M terminal belongs. In this way, the conflict when a large number of terminals send access requests in the same frame at the same time can be reduced to a large extent.

The grouping method includes grouping according to a terminal identifier (for example, the IMSI, International Mobile Subscriber Identity) by using a certain algorithm. Grouping information may be an indication sent by the network to the M2M terminals through signaling, and definitely may be configured and pre-stored in the M2M terminals.

Generally, different groups of terminals share frame resources of the access channels by the same proportion, as shown in Table 1:

**Table 1**

| | | | | | | | | | | |
|---|---|---|---|---|---|---|---|---|---|---|
| group1 | group2 | group3 | ....... | groupN | group1 | group2 | group3 | ...... | groupN | ..... |

Definitely, for some terminals executing high-priority services, the probability of accessing the network may be increased through changing the proportion of frame resources occupied by the terminals in the access channels. The high-priority services may be scheduled more frequently, so as to ensure that M2M high-priority/emergent service data is transmitted in time. As shown in Table 2, Group1 is an alarm service with high priority, and Group2 and Group3 are ordinary services. Therefore, Group1 sends access requests more frequently than the other groups.

**Table 2**

| | | | | | | | | | | | | |
|---|---|---|---|---|---|---|---|---|---|---|---|---|
| group1 | group2 | group1 | Group3 | ...... | groupN | group1 | group2 | group1 | group3 | ...... | groupN | ...... |

To better implement the aforementioned network access method, this example further provides a network access apparatus, as shown in FIG. 9, which includes:
an obtaining unit 91, configured to obtain terminal grouping information and allocation information of an access channel corresponding to each group of terminals respectively; and
a sending unit 92, configured to send an access request on an access channel resource corresponding to a current terminal according to the terminal grouping information and the allocation information of the access channel.

In the method and apparatus provided in the embodiments of the present invention, different terminals are grouped into different groups, and then different frames are allocated to different groups of terminals for network random access. Therefore, a burst spike of access bursts caused by initiating M2M services at the same time is prevented, thereby solving the problem of a congestion phenomenon of a random access channel effectively. Moreover, through the solutions provided by the embodiments of the present invention, there is no need to assign dedicated access time through delivering signaling to each terminal by an M2M server, thereby reducing signaling loads of the network.

The network access method and apparatus provided in the embodiments of the present invention are applicable to all radio communication systems, including but not limited to the GSM (Global System for Mobile Communications, global system for mobile communications), the WCDMA (Wideband Code Division Multiple Access, wideband code division multiple access), the TD-SCDMA (Time Division-Synchronous Code Division Multiple Access, time division-synchronous code division multiple access), the LTE (Long Term Evolution, long term evolution), the Wimax (Worldwide Interoperability for Microwave Access, worldwide interoperability for microwave access), and the like.

Through the above description of the implementation manners, it is clear to persons skilled in the art that the present invention may be accomplished through software on a necessary hardware platform, or definitely through hardware. Based on this, the above technical solutions or the part that makes contributions to the prior art can be substantially embodied in the form of a software product. The computer software product may be stored in a storage medium such as a ROM/RAM, a magnetic disk, or an optical disk, and contain several instructions to instruct computer equipment (for example, a personal computer, a server, or network equipment) to perform the method described in the embodiments or in some parts of the embodiments of the present invention.

The foregoing descriptions are merely specific embodiments of the present invention, but are not intended to limit the protection scope of the present invention. Changes or replacements readily apparent to persons skilled in the art within the technical scope of the present invention shall fall within the protection scope of the present invention as defined by the subject-matter of the appended claims.

## Claims

1. A network access method, comprising:
obtaining data transmission configuration information (301, 401, 402, 501), wherein the data transmission configuration information comprises start time, an effective duration of data transmission, and randomization granularity;
determining (101, 303, 405, 504) service triggering time according to a predetermined triggering time randomization policy; and
at the determined service triggering time, initiating (102, 305, 406, 505), by a terminal, a random access request procedure;
wherein the determining the service triggering time according to the predetermined triggering time randomization policy comprises:
calculating a time span of the data transmission according to the start time and the effective duration of the data transmission;
dividing the time span into at least one time interval according to the randomization granularity; and
randomly selecting a time interval from the at least one time interval, wherein start time of the selected time interval is the service triggering time.

2. The network access method according to claim 1, wherein before the determining the service triggering time according to the predetermined triggering time randomization policy the method further comprises:
sending (404, 503), by an application layer of the terminal, a service triggering request to a radio resource layer, and
the determining the service triggering time according to the predetermined triggering time randomization policy comprises: determining, by the radio resource layer of the terminal, the service triggering time according to the predetermined triggering time randomization policy.

3. The network access method according to claim 2, wherein the service triggering time is triggering time of an immediate assignment procedure.

4. The network access method according to any one of claims 1 to 3, wherein
the determining the service triggering time according to the predetermined triggering time randomization policy comprises: determining, by an application layer of the terminal, the service triggering time according to the predetermined triggering time randomization policy; and
before the initiating the random access request procedure, the method further comprises: sending (304), by the application layer of the terminal, a service triggering request to a radio resource layer at the determined service triggering time.

5. The network access method according to claim 1, wherein after the obtaining the data transmission configuration information, the method further comprises:
judging (302, 403, 502) whether the start time of the data transmission in the data transmission configuration information arrives; and
the determining the service triggering time according to the predetermined triggering time randomization policy comprises: after the start time of the data transmission arrives, determining the service triggering time according to the predetermined triggering time randomization policy.

6. A network access apparatus, comprising:
an obtaining unit (63), configured to obtain data transmission configuration information, wherein the data transmission configuration information comprises start time, an effective duration of data transmission, and randomization granularity;
a determining unit (21, 61), configured to determine service triggering time according to a predetermined triggering time randomization policy; and
an access unit (22, 62), configured to initiate a random access request procedure at the determined service triggering time;
wherein the determining unit comprises:
a calculating module, configured to calculate a time span of the data transmission according to the start time and the effective duration of the data transmission;
a dividing module, configured to divide the time span into at least one time interval according to the randomization granularity; and
a selecting module, configured to randomly select a time interval from the at least one time interval, wherein start time of the selected time interval is the service triggering time.

7. The network access apparatus according to claim 6, wherein the determining unit is located at an application layer of the apparatus; and
the apparatus further comprises a triggering unit (64) located at the application layer, wherein the triggering unit is configured to send a service triggering request to a radio resource layer at the service triggering time determined by the determining unit.

8. The network access apparatus according to claim 6, further comprising:
a judging unit (65), configured to judge whether the start time of the data transmission arrives, wherein
the determining unit is configured to, after the judging unit determines that the start time of the data transmission arrives, determine the service triggering time according to the predetermined triggering time randomization policy.

## Patentansprüche

1. Netzzugangsverfahren, das Folgendes umfasst:
Erfassen von Datenübertragungskonfigurationsinformationen (301, 401, 402, 501), wobei die Datenübertragungskonfigurationsinformationen eine Startzeit, eine effektive Dauer der Datenübertragung und eine Randomisierungsgranularität umfassen;
Bestimmen (101, 303, 405, 504) einer Diensteinleitungszeit gemäß einer vorbestimmten Einleitungszeitrandomisierungsstrategie; und
Initiieren (102, 305, 406, 505) einer Direktzugriffsanforderungsprozedur durch ein Endgerät zu der bestimmten Diensteinleitungszeit;
wobei das Bestimmen der Diensteinleitungszeit gemäß der vorbestimmten Einleitungszeitrandomisierungsstrategie Folgendes umfasst:
Berechnen einer Zeitspanne der Datenübertragung gemäß der Startzeit und der effektiven Dauer der Datenübertragung;
Aufteilen der Zeitspanne in wenigstens ein Zeitintervall gemäß der Randomisierungsgranularität; und
zufälliges Auswählen eines Zeitintervalls aus dem wenigstens einen Zeitintervall, wobei die Startzeit des ausgewählten Zeitintervalls die Diensteinleitungszeit ist.

2. Netzzugangsverfahren nach Anspruch 1, wobei das Verfahren vor dem Bestimmen der Diensteinleitungszeit gemäß der vorbestimmten Einleitungszeitrandomisierungsstrategie ferner Folgendes umfasst:
Senden (404, 503) einer Diensteinleitungsanforderung durch eine Anwendungsschicht des Endgeräts zu einer Funkbetriebsmittelschicht, und
wobei das Bestimmen der Diensteinleitungszeit gemäß der vorbestimmten Einleitungszeitrandomisierungsstrategie Folgendes umfasst: Bestimmen der Diensteinleitungszeit durch die Funkbetriebsmittelschicht des Endgeräts gemäß der vorbestimmten Einleitungszeitrandomisierungsstrategie.

3. Netzzugangsverfahren nach Anspruch 2, wobei die Diensteinleitungszeit die Einleitungszeit einer unmittelbaren Zuweisungsprozedur ist.

4. Netzzugangsverfahren nach einem der Ansprüche 1 bis 3, wobei das Bestimmen der Diensteinleitungszeit gemäß der vorbestimmten Einleitungszeitrandomisierungsstrategie Folgendes umfasst: Bestimmen der Diensteinleitungszeit durch eine Anwendungsschicht des Endgeräts gemäß der vorbestimmten Einleitungszeitrandomisierungsstrategie; und
wobei das Verfahren vor dem Initiieren der Direktzugriffsanforderungsprozedur ferner Folgendes umfasst: Senden (304) einer Diensteinleitungsanforderung durch die Anwendungsschicht des Endgeräts zu der bestimmten Diensteinleitungszeit zu einer Funkbetriebsmittelschicht.

5. Netzzugangsverfahren nach Anspruch 1, wobei das Verfahren nach dem Erfassen der Datenübertragungskonfigurationsinformationen ferner Folgendes umfasst:
Bewerten (302, 403, 502), ob die Startzeit der Datenübertragung in den Datenübertragungskonfigurationsinformationen eintrifft; und
wobei das Bestimmen der Diensteinleitungszeit gemäß der vorbestimmten Einleitungszeitrandomisierungsstrategie Folgendes umfasst: Bestimmen der Diensteinleitungszeit gemäß der vorbestimmten Einleitungszeitrandomisierungsstrategie, nachdem die Startzeit der Datenübertragung eintrifft.

6. Netzzugangsvorrichtung, die Folgendes umfasst:
eine Erfassungseinheit (63), die konfiguriert ist, Datenübertragungskonfigurationsinformationen zu erfassen, wobei die Datenübertragungskonfigurationsinformationen eine Startzeit, eine effektive Dauer der Datenübertragung und eine Randomisierungsgranularität umfassen,
eine Bestimmungseinheit (21, 61), die konfiguriert ist, die Diensteinleitungszeit gemäß einer vorbestimmten Einleitungszeitrandomisierungsstrategie zu bestimmen; und
eine Zugangseinheit (22, 62), die konfiguriert ist, eine Direktzugriffsanforderungsprozedur zu der bestimmten Diensteinleitungszeit zu initiieren;
wobei die Bestimmungseinheit Folgendes umfasst:
ein Berechnungsmodul, das konfiguriert ist, eine Zeitspanne der Datenübertragung gemäß der Startzeit und der effektiven Dauer der Datenübertragung zu berechnen;
ein Aufteilungsmodul, das konfiguriert ist, die Zeitspanne in wenigstens ein Zeitintervall gemäß der Randomisierungsgranularität aufzuteilen; und
ein Auswahlmodul, das konfiguriert ist, zufällig ein Zeitintervall aus dem wenigstens einen Zeitintervall auszuwählen, wobei die Startzeit des ausgewählten Zeitintervalls die Diensteinleitungszeit ist.

7. Netzzugangsvorrichtung nach Anspruch 6, wobei sich die Bestimmungseinheit in einer Anwendungsschicht der Vorrichtung befindet; und
die Vorrichtung ferner eine Einleitungseinheit (64) umfasst, die sich in der Anwendungsschicht befindet, wobei die Einleitungseinheit konfiguriert ist, eine Diensteinleitungsanforderung zu einer Funkbetriebsmittelschicht zu der Diensteinleitungszeit zu senden, die von der Bestimmungseinheit bestimmt ist.

8. Netzzugangsvorrichtung nach Anspruch 6, die ferner Folgendes umfasst:
eine Bewertungseinheit (65), die konfiguriert ist, zu bewerten, ob die Startzeit der Datenübertragung eintrifft, wobei
die Bestimmungseinheit konfiguriert ist, die Diensteinleitungszeit gemäß der vorbestimmten Einleitungszeitrandomisierungsstrategie zu bestimmen, nachdem die Bewertungseinheit bestimmt, dass die Startzeit der Datenübertragung eintrifft.

## Revendications

1. Procédé d'accès de réseau, comprenant :
l'obtention d'informations de configuration de transmission de données (301, 401, 402, 501), les informations de configuration de transmission de données comprenant un temps de départ, une durée effective de transmission de données et une granularité de randomisation ;
la détermination (101, 303, 405, 504) d'un temps de déclenchement de service en fonction d'une stratégie de randomisation de temps de déclenchement prédéterminée ; et
au temps de déclenchement de service déterminé, le lancement (102, 305, 406, 505), par un terminal, d'une procédure de requête d'accès aléatoire ;
dans lequel la détermination du temps de déclenchement de service en fonction de la stratégie de randomisation de temps de déclenchement prédéterminée comprend :
le calcul d'une fenêtre temporelle de la transmission de données en fonction du temps de départ et de la durée effective de la transmission de données ;
la division de la fenêtre temporelle en au moins un intervalle de temps en fonction de la granularité de randomisation ; et
la sélection aléatoire d'un intervalle de temps à partir de l'au moins un intervalle de temps, le temps de départ de l'intervalle de temps sélectionné étant le temps de déclenchement de service.

2. Procédé d'accès de réseau selon la revendication 1, comprenant en outre, avant la détermination du temps de déclenchement de service en fonction de la stratégie de randomisation de temps de déclenchement prédéterminée :
l'envoi (404, 503), par une couche application du terminal, d'une requête de déclenchement de service à une couche de ressources radio, et
la détermination du temps de déclenchement de service en fonction de la stratégie de randomisation de temps de déclenchement prédéterminée comprend : la détermination, par la couche de ressources radio du terminal, du temps de déclenchement de service en fonction de la stratégie de randomisation de temps de déclenchement prédéterminée.

3. Procédé d'accès de réseau selon la revendication 2, dans lequel le temps de déclenchement de service est un temps de déclenchement d'une procédure d'attribution immédiate.

4. Procédé d'accès de réseau selon l'une quelconque des revendications 1 à 3, dans lequel
la détermination du temps de déclenchement de service en fonction de la stratégie de randomisation de temps de déclenchement prédéterminée comprend : la détermination, par une couche application du terminal, du temps de déclenchement de service en fonction de la stratégie de randomisation de temps de déclenchement prédéterminée ;
et
le procédé comprenant en outre, avant le lancement de la procédure de requête d'accès aléatoire : l'envoi (304), par la couche application du terminal, d'une requête de déclenchement de service à une couche de ressources radio au temps de déclenchement de service déterminé.

5. Procédé d'accès de réseau selon la revendication 1, le procédé comprenant en outre, après l'obtention des informations de configuration de transmission de données :
le jugement (302, 403, 502) que le temps de départ de la transmission de données dans les informations de configuration de transmission de données arrive ou non ; et
la détermination du temps de déclenchement de service en fonction de la stratégie de randomisation de temps de déclenchement prédéterminée comprend : après que le temps de départ de la transmission de données arrive, la détermination du temps de déclenchement de service en fonction de la stratégie de randomisation de temps de déclenchement prédéterminée.

6. Appareil d'accès de réseau, comprenant :
une unité d'obtention (63), configurée pour obtenir des informations de configuration de transmission de données, les informations de configuration de transmission de données comprenant un temps de départ, une durée effective de transmission de données et une granularité de randomisation ;
une unité de détermination (21, 61), configurée pour déterminer un temps de déclenchement de service en fonction d'une stratégie de randomisation de temps de déclenchement prédéterminée ; et
une unité d'accès (22, 62), configurée pour lancer une procédure de requête d'accès aléatoire au temps de déclenchement de service déterminé ;
dans lequel l'unité de détermination comprend :
un module de calcul, configuré pour calculer une fenêtre temporelle de la transmission de données en fonction du temps de départ et de la durée effective de la transmission de données ;
un module de division, configuré pour diviser la fenêtre temporelle en au moins un intervalle de temps en fonction de la granularité de randomisation ; et
un module de sélection, configuré pour sélectionner de manière aléatoire un intervalle de temps à partir de l'au moins un intervalle de temps, le temps de départ de l'intervalle de temps sélectionné étant le temps de déclenchement de service.

7. Appareil d'accès de réseau selon la revendication 6, dans lequel l'unité de détermination est située au niveau d'une couche application de l'appareil ; et l'appareil comprend en outre une unité de déclenchement (64) située au niveau de la couche application, l'unité de déclenchement étant configurée pour envoyer une requête de déclenchement de service à une couche de ressources radio au temps de déclenchement de service déterminé par l'unité de détermination.

8. Appareil d'accès de réseau selon la revendication 6, comprenant en outre :
une unité de jugement (65), configurée pour juger que le temps de départ de la transmission de données arrive ou non, dans lequel
l'unité de détermination est configurée pour déterminer, après que l'unité de jugement détermine que le temps de départ de la transmission de données arrive, le temps de déclenchement de service en fonction de la stratégie de randomisation de temps de déclenchement prédéterminée.
